# FASCICULE DE BREVET EUROPEEN

(11) **EP 4 198 247 B1**
(45) Date de publication et mention de la délivrance du brevet: **10.07.2024**
(21) Numéro de dépôt: 21216075.8
(22) Date de dépôt: 20.12.2021
(51) Int. Cl.: E06B 3/82, B29C 44/12

(54) **PROCÉDÉ DE FABRICATION D'UN PANNEAU OUVRANT DE PORTE COMPRENANT UN CADRE PÉRIPHÉRIQUE, UNE ÂME CENTRALE ISOLANTE ET DEUX PAREMENTS DE RECOUVREMENT**
VERFAHREN ZUR HERSTELLUNG EINES TÜRÖFFNUNGSPANEELS MIT EINEM EINFASSUNGSRAHMEN, EINEM ISOLIERENDEN MITTELKERN UND ZWEI DECKSCHICHTEN
METHOD FOR MANUFACTURING AN OPENABLE PANEL OF A DOOR COMPRISING A PERIPHERAL FRAME, AN INSULATING CENTRAL CORE AND TWO COVERING FACINGS

(43) Date de publication de la demande: 21.06.2023
(73) Titulaire: MéO, 85610 Cugand (FR)
(72) Inventeur: GRENET, Antoine, 85600 Boufféré (FR); SOULARD, Antoine, 85140 Les Essarts (FR); SOUCHET, Anthony, 85610 Cugand (FR)
(74) Mandataire: Jacobacci Coralis Harle

(56) Documents cités:
- EP-A1- 0 022 167
- EP-A1- 1 145 768
- FR-A1- 3 113 083
- US-A- 3 402 520
- US-A- 6 068 802
- US-B1- 6 389 769

## Description

### Domaine technique de l'invention

La présente invention concerne le domaine technique général de la menuiserie industrielle.

Elle concerne en particulier les menuiseries de type porte, qui comprennent un cadre dormant associé à un panneau ouvrant, lequel panneau ouvrant comprend un cadre périphérique formé de deux montants latéraux, d'une traverse basse et d'une traverse haute, qui délimitent ensemble un logement central, lequel logement central est comblé au moins partiellement par une structure isolante et est fermé par un parement intérieur et par un parement extérieur.

L'invention concerne plus particulièrement un procédé de fabrication d'un tel panneau ouvrant avec âme centrale isolante, ainsi que le panneau ouvrant et la porte obtenus par ce procédé.

### Etat de la technique

L'entrée d'une habitation individuelle ou d'un immeuble collectif est généralement équipée d'une porte interposée entre un volume extérieur et un volume intérieur du bâtiment, cette porte étant constituée d'un cadre dormant associé à un ou deux panneau(x) ouvrant(s) pivotant(s) sur des organes de rotation, avec éventuellement un châssis fixe latéral ou deux châssis fixes latéraux et/ou un imposte.

Dans certains cas, le panneau ouvrant comprend :
- un cadre périphérique formé de deux montants latéraux, d'une traverse basse et d'une traverse haute qui délimitent ensemble un logement central,
- une structure isolante rapportée comblant au moins partiellement ce logement central,
- un parement intérieur fermant le logement central du côté du volume intérieur du bâtiment, et
- un parement extérieur fermant le logement central du côté du volume extérieur du bâtiment.

Le panneau ouvrant peut encore comprendre un oculus formé d'une ouverture traversante obturée par une structure de remplissage (généralement un vitrage), la structure de remplissage correspondante étant prise en sandwich entre les parements intérieur et extérieur, maintenue par ces derniers et par la structure isolante.

Une solution connue pour fabriquer de tels panneaux ouvrants « isolés » consiste à positionner au moins une plaque prédécoupée de matériau isolant, type plaque de polystyrène ou de polyuréthane expansé, au sein du logement central délimité par le cadre périphérique, et de fixer de part et d'autre le parement extérieur et le parement intérieur (éventuellement, l'un des deux parements peut être solidarisé avec le cadre périphérique avant le positionnement de la plaque de matériau isolant).

La découpe de la plaque de matériau isolant tient compte de la présence éventuelle d'un oculus préalablement convenablement positionné dans le logement central du cadre périphérique.

Mais la solidarisation entre la plaque de matériau isolant et le cadre périphérique ne peut pas être optimale, ce qui limite les caractéristiques de rigidité de l'ensemble cadre/isolant.

De plus ce genre de technique génère des déchets importants lors de la préparation de la plaque de matériau isolant.

Une autre solution consiste à préparer une sorte de caisson formé du cadre périphérique et des parements intérieur et extérieur, cela avec ou sans oculus, puis à injecter sous pression dans le logement central de ce caisson un mélange liquide ou semi-liquide de matériau moussant expansible isolant, par exemple un mélange de polyol et d'isocyanate qui, après polymérisation, forme une mousse polyuréthane isolante.

L'injection du matériau moussant est réalisée par un orifice d'injection ménagé dans le cadre périphérique. Le matériau moussant s'écoule au sein du logement central et il s'expanse jusqu'à combler ce logement, l'air étant simultanément chassé par un ou plusieurs évents également prévus dans le cadre périphérique.

Ce type de procédé de fabrication ne garantit pas un remplissage homogène du logement central, en particulier en cas de présence d'un oculus. Et en tout état de cause il nécessite la présence de pressions relativement importantes pour que le mélange de matériau moussant puisse accéder à l'ensemble du volume de ce logement central.

Cependant, de telles pressions ne sont pas toujours faciles à mettre en oeuvre et à contrôler ; de plus elles sont susceptibles d'entrainer des déformations résiduelles du cadre périphérique.

D'autre part, la mousse expansée isolante adhère aux faces intérieures des parements, ce qui peut poser des problèmes de déformation du panneau ouvrant, en cas de présence d'un parement en tôle d'aluminium et de dilatation d'un tel parement sous la chaleur.

Les documents EP 0 022 167 A1 et US 6 389 769 B1 montrent des procédés avec injection de mousse sous pression.

### Présentation de l'invention

Afin de remédier aux inconvénients précités de l'état de la technique, la présente invention propose un procédé de fabrication d'un panneau ouvrant de porte, pour une porte destinée à équiper une ouverture de bâtiment entre un volume extérieur et un volume intérieur, lequel panneau ouvrant comprend :
- un cadre périphérique formé de deux montants latéraux, d'une traverse basse et d'une traverse haute,
   lesquels montants et traverses comprennent chacun une face latérale externe, une face latérale interne, une face frontale intérieure destinée à être orientée du côté dudit volume intérieur du bâtiment et une face frontale extérieure destinée à être orientée du côté dudit volume extérieur du bâtiment, lesquelles faces latérales internes desdits montants et traverses constituent ensemble une bordure interne qui délimite un logement central,
- une structure isolante rapportée comblant au moins partiellement ledit logement central,
- un parement intérieur fermant ledit logement central du côté destiné à être orienté vers ledit volume intérieur du bâtiment,
- un parement extérieur fermant ledit logement central du côté destiné à être orienté vers ledit volume extérieur du bâtiment,
ce procédé de fabrication étant caractérisé par le fait qu'il comprend les opérations consistant :
(a) à préparer ledit cadre périphérique,
(b) à fournir une installation de type presse comprenant un support horizontal de presse et un couvercle de presse,
(c) à poser ledit cadre périphérique sur ledit support horizontal de presse, ledit logement central étant fermé du côté dudit support horizontal de presse, et comprenant une ouverture supérieure de logement,
(d) à déposer un mélange liquide ou semi-liquide de matériau moussant expansible isolant dans ledit logement central, par ladite ouverture supérieure de logement,
(e) à actionner ledit couvercle de presse pour le mettre en appui sur ledit cadre périphérique et fermer ladite ouverture supérieure de logement,
(f) à laisser le matériau moussant expansible isolant s'expandre dans ledit logement central,
(g) après expansion totale dudit matériau moussant expansible isolant, à actionner ledit couvercle de presse pour le séparer dudit cadre périphérique,
(h) à extraire l'ensemble cadre périphérique/mousse isolante de ladite presse.

L'opération de dépose du mélange liquide ou semi-liquide de matériau moussant expansible isolant dans ledit logement central, par ladite ouverture supérieure de logement peut être réalisée avec ledit support horizontal de presse installé dans l'installation de type presse, ou en dehors de l'installation de type presse.

D'autres caractéristiques non limitatives et avantageuses du procédé conforme à l'invention, prises individuellement ou selon toutes les combinaisons techniquement possibles, sont les suivantes :
- l'opération de préparation du cadre périphérique peut comprendre une opération de réalisation d'au moins un évent qui traverse l'un au moins des montants et/ou l'une au moins des traverses du cadre périphérique en débouchant dans ladite face latérale externe et dans ladite face latérale interne, lequel au moins un évent est adapté pour permettre l'évacuation de l'air sous pression à l'intérieur du logement central dudit cadre périphérique lors de l'expansion du mélange liquide ou semi-liquide de matériau moussant expansible isolant ;
- le procédé de fabrication d'un panneau ouvrant de porte selon l'invention comprend de préférence une opération de calage, au moyen de cales, du cadre périphérique posé sur ledit support horizontal de presse, avant l'opération de dépose du mélange liquide ou semi-liquide de matériau moussant expansible isolant, ladite opération de calage étant réalisée du côté des faces latérales externes des montants et traverses dudit cadre périphérique, pour éviter sa déformation sous la poussée du matériau moussant expansible isolant lors de sa phase d'expansion ;
- le procédé de fabrication d'un panneau ouvrant de porte peut comprendre une opération de pose des accessoires intérieurs du panneau ouvrant, tels que vitrage(s), décor(s), insert(s) mécanique(s), renfort(s) acoustique(s) et/ou thermique(s), gaine(s) plastiques(s) pour le passage de câbles électriques, dans ledit logement central, entre l'opération de pose du cadre périphérique sur le support horizontal de presse, et l'opération de dépose du mélange liquide ou semi-liquide de matériau moussant expansible isolant ;
- selon une mise en oeuvre particulière, le support horizontal de presse consiste en une table munie d'un revêtement antiadhérent, par exemple en forme de bâche silicone ou revêtement téflon, l'opération de dépose du mélange liquide ou semi-liquide de matériau moussant expansible isolant dans ledit logement central étant réalisée directement sur ledit support horizontal de presse constitué de ladite table munie de son revêtement antiadhérent ;
alors, le procédé peut comprendre des opérations de pose du parement intérieur et du parement extérieur, après l'opération d'extraction hors de ladite presse de l'ensemble cadre périphérique/mousse isolante ;
- Selon une autre mise en oeuvre particulière, l'opération de préparation du cadre périphérique comprend une opération de fixation de l'un desdits parements intérieur ou extérieur sur ledit cadre périphérique, l'opération de dépose du mélange liquide ou semi-liquide de matériau moussant expansible isolant dans ledit logement central étant réalisée sur ledit parement intérieur ou extérieur fixé sur ledit cadre périphérique ; et le procédé de fabrication comprend alors une opération de pose de l'autre parement intérieur ou extérieur, après l'opération d'extraction, hors de ladite presse, de l'ensemble cadre périphérique/mousse isolante ;
- le procédé de fabrication d'un panneau ouvrant de porte peut comprendre une opération de pose de la quincaillerie du panneau ouvrant, telle que parties femelles de paumelles ou de fiches, poignée, crémone, câbles électriques, quincaillerie diverse, après les opérations de pose des parements intérieur et extérieur ;
- le mélange liquide ou semi-liquide de matériau moussant expansible isolant consiste de préférence en un mélange de polyol et d'isocyanate pour obtenir, après polymérisation, une mousse isolante de type polyuréthane ;
- l'opération de dépose du mélange liquide ou semi-liquide de matériau moussant expansible isolant est réalisée au moyen d'une buse adaptée, portée par un bras robot mobile dans l'espace, ladite dépose étant réalisée de sorte à répartir ledit mélange liquide ou semi liquide sur le ledit support horizontal de presse ou sur l'un desdits parements intérieur ou extérieur, selon un programme prédéterminé.

La présente invention concerne encore un panneau ouvrant de porte, pour une porte destinée à équiper une ouverture de bâtiment, lequel panneau ouvrant est obtenu par un procédé tel que défini ci-dessus et comprend :
- un cadre périphérique formé de deux montants latéraux, d'une traverse basse et d'une traverse haute, qui délimitent ensemble un logement central,
- une structure isolante rapportée comblant au moins partiellement ledit logement central et fixée audit cadre périphérique,
- un parement intérieur fermant un côté dudit logement central, et
- un parement extérieur fermant l'autre côté dudit logement central.

L'invention concerne également une menuiserie de type porte pour équiper une ouverture de bâtiment entre un volume extérieur et un volume intérieur, laquelle menuiserie comprend un cadre dormant associé à un panneau ouvrant tel que défini ci-dessus.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent une forme, non limitative, de réalisation de l'invention et où :
La figure 1 est une vue schématique d'une menuiserie en forme de porte, vue de face du côté du volume intérieur du bâtiment équipé, comprenant un cadre dormant associé à un panneau ouvrant du type concerné par la présente invention ;
La figure 2 est une vue en coupe de la menuiserie de type porte, selon le plan de coupe 2-2 de la figure 1 ;
La figure 3 est une vue schématique en perspective d'un cadre périphérique d'ouvrant de porte, pour la fabrication d'un panneau ouvrant de porte par un procédé conforme à l'invention ;
La figure 4 montre le cadre périphérique de panneau ouvrant de la figure 3, positionné dans une installation de type presse comprenant un support horizontal de presse et un couvercle de presse, pour la mise en oeuvre du procédé de fabrication de panneau ouvrant de porte selon l'invention ;
La figure 5 illustre une étape suivante du procédé de fabrication de panneau ouvrant de porte, consistant à poser les accessoires intérieurs du panneau ouvrant ;
La figure 6 illustre encore une étape suivante du procédé, consistant à déposer un mélange liquide ou semi-liquide de matériau moussant expansible isolant, dans le logement central du cadre périphérique de panneau ouvrant de porte ;
La figure 7 illustre une étape ultérieure du procédé consistant à fermer le logement central du cadre périphérique par le couvercle de presse, pour cloisonner l'expansion du matériau moussant expansible isolant ;
La figure 8 illustre le cadre périphérique avec son matériau isolant expansé, après ouverture du couvercle de presse ;
La figure 9 illustre une étape ultérieure du procédé consistant à poser un parement intérieur et un parement extérieur de part et d'autre du cadre périphérique associé à son matériau isolant.

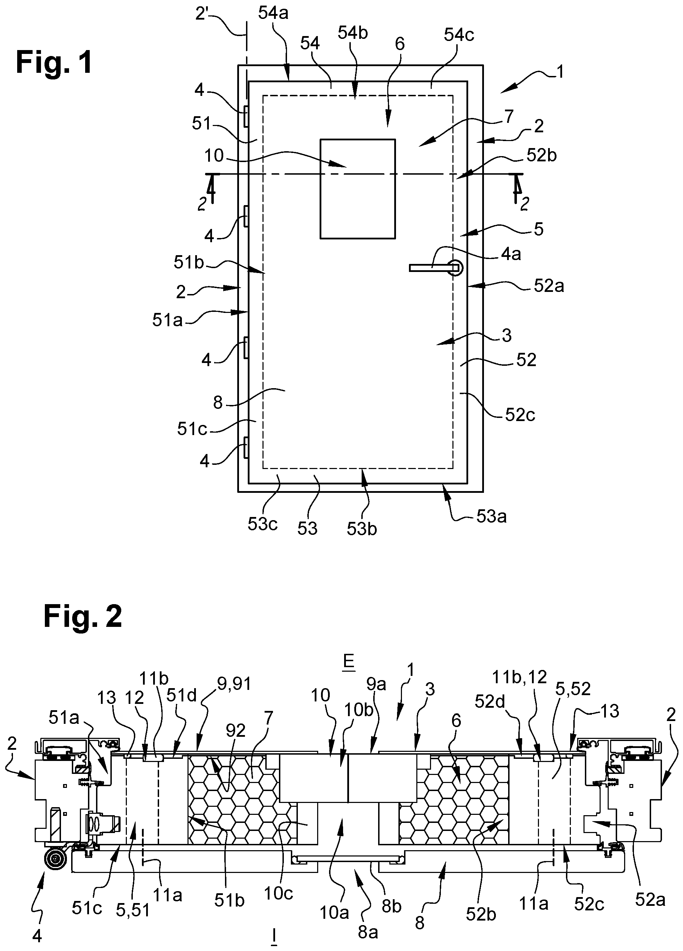

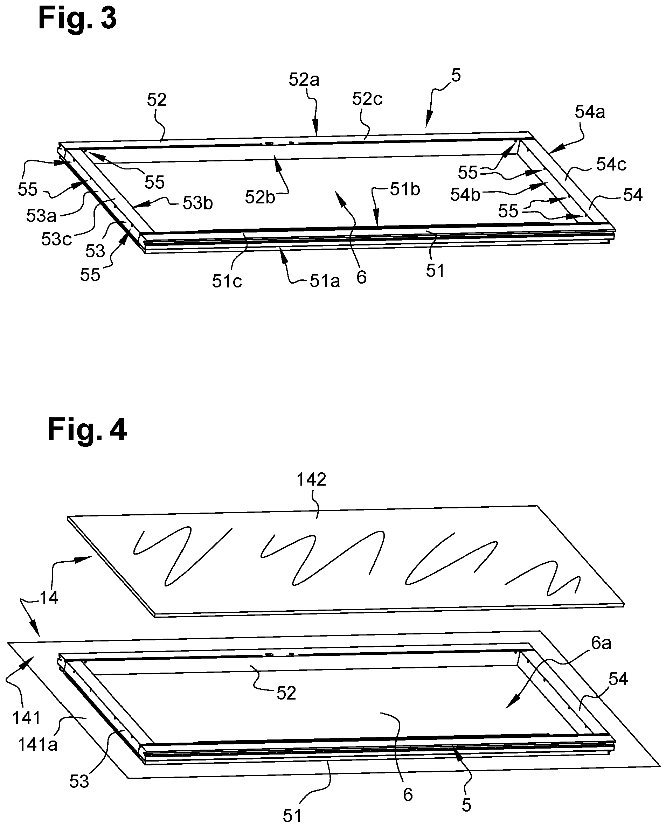

La présente invention concerne un procédé pour fabriquer un panneau ouvrant de porte, pour une porte du type tel que représenté sur les figures 1 et 2, le procédé de fabrication en question étant détaillé ci-après en relation avec la succession d'étapes/opérations illustrées sur figures 3 à 9.

La menuiserie de type porte 1 représentée schématiquement sur les figures 1 et 2 est adaptée pour équiper une ouverture de bâtiment entre un volume extérieur E et un volume intérieur I. Cette menuiserie de type porte 1 comprend un cadre dormant 2, associé à un panneau ouvrant 3.

Le panneau ouvrant 3 est monté pivotant sur le cadre dormant 2 autour d'un axe de pivotement vertical 2', au moyen de charnières 4 (par exemple formées de paumelles ou fiches).

Le panneau ouvrant 3 comprend un cadre périphérique 5 formé de deux montants latéraux 51, 52, d'une traverse basse 53 et d'une traverse haute 54, qui délimitent ensemble un logement central 6 comblé par une structure isolante 7 rapportée.

Un parement intérieur 8 ferme le logement central 6 équipé de la structure isolante 7, du côté du volume intérieur I du bâtiment ; et un parement extérieur 9 ferme ledit logement central 6 du côté du volume extérieur E.

Plus précisément, les montants 51, 52 et les traverses 53, 54 du panneau ouvrant 3 comprennent chacun une face latérale externe, respectivement 51a, 52a, 53a, 54a, une face latérale interne, respectivement 51b, 52b, 53b, 54b, une face frontale intérieure, respectivement 51c, 52c, 53c, 54c, destinée à être orientée du côté du volume intérieur I, et une face frontale extérieure, respectivement 51d, 52d, 53d, 54d, destinée à être orientée du côté du volume extérieur E. Les faces frontales intérieures 51c, 52c, 53c, 54c et les faces frontales extérieures 51d, 52d, 53d, 54d définissent entre elles l'épaisseur du cadre périphérique 5 ; les faces latérales internes 51b, 52b, 53b, 54b des montants 51, 52 et traverses 53, 54 délimitent le logement central 6 ; en outre les faces latérales externes 51a, 52a, 53a, 54a, d'une part, et les faces latérales internes 51b, 52b, 53b, 54b, d'autre part, définissent entre elles la largeur des montants 51, 52 et des traverses 53, 54.

Le panneau ouvrant 3 comprend en outre un oculus 10 qui traverse son épaisseur, lequel oculus 10 est constitué d'une ouverture 10a associée à une structure de remplissage 10b, par exemple en forme de vitrage(s).

La structure isolante 7 comble ici la totalité du volume du logement central 6 (entre le cadre périphérique 5 et l'oculus 10). Comme cela est détaillé dans la suite de la description, cette structure isolante 7 peut consister en une mousse isolante obtenue après polymérisation d'un mélange liquide ou semi-liquide de matériau moussant expansible isolant (de préférence un mélange de polyol et d'isocyanate, pour obtenir une mousse isolante 7 de type polyuréthane).

Le parement intérieur 8 et le parement extérieur 9 consistent chacun en un plateau de matière ayant quelques millimètres ou dizaines de millimètres d'épaisseur (par exemple 2 à 20 mm d'épaisseur). Ils peuvent être réalisés en bois ou en tôle métallique (par exemple une tôle d'aluminium de 2 à 4 mm d'épaisseur).

Ces parements intérieur 8 et extérieur 9 comprennent une face intérieure destinée à être orientée vers la structure isolante 7, et une face extérieure opposée.

La face intérieure du parement intérieur 8 est disposée en regard des faces frontales intérieures 51c, 52c, 53c, 54c des montants 51, 52 et traverses 53, 54 du cadre périphérique 5.

Ce parement intérieur 8 est ici réalisé en bois et sa face intérieure est assemblée avec les faces frontales intérieures 51c, 52c, 53c, 54c des montants 51, 52 et traverses 53, 54 du cadre périphérique 5 par des moyens d'assemblage 11a qui sont de préférence du type amovible pour permettre son démontage (on peut par exemple utiliser des plots permettant un assemblage par emboitement élastique).

A titre de variante le parement intérieur 8 peut être assemblé avec le cadre périphérique 5 par vissage et/ou par collage.

Le parement intérieur 8 comprend ici une ouverture 8a associée à une structure de remplissage 8b (par exemple un panneau de verre ou de polycarbonate), disposés en regard de l'oculus 10.

La face intérieure du parement extérieur 9 est disposée en regard des faces frontales extérieures 51d, 52d, 53d, 54d des montants 51, 52 et traverses 53, 54 du cadre périphérique 5 ; et elle est assemblée avec ces dernières par des moyens d'assemblage 11b.

Ce parement extérieur 9 est ici réalisé en tôle d'aluminium et les moyens d'assemblage 11b consistent en une colle. Cette colle d'assemblage 11b peut être déposée sous la forme d'un cordon périphérique positionné dans une rainure périphérique 12 ménagée dans les faces frontales extérieures 51d, 52d, 53d, 54d des montants 51, 52 et traverses 53, 54.

Une structure d'adhésif double face 13 est avantageusement positionnée sur tout le pourtour extérieur du parement extérieur 9, interposée entre la face intérieure du parement 9 et les faces frontales en regard des montants 51, 52 et traverses 53, 54 du cadre périphérique 5, pour tenir le parement 9 le temps de prise de la colle 11 et pour empêcher cette colle 11 de déborder sur les côtés. Cette structure d'adhésif double face 13 assure également une étanchéité à l'air complémentaire.

Le parement extérieur 9 comprend ici une ouverture 9a ménagée en regard de l'oculus 10.

On remarque encore que la face de la structure de remplissage 10b qui est orientée du côté du volume intérieur I est ici en appui contre des profils de compensation d'épaisseur 10c, ici en forme de cadre réalisé en bois, qui compense l'épaisseur de la structure isolante 7.

Dans une variante de réalisation, la structure de remplissage 10b peut combler totalement l'espace entre les deux parements 8, 9.

Une poignée de manoeuvre 4a (figure 1) est fixée sur un carré traversant, associée de manière classique à des rosaces vissées sur les faces extérieures des parements intérieur 8 et extérieur 9.

Un procédé pour fabriquer le panneau ouvrant 3 de la menuiserie de type porte 1 est illustré en plusieurs étapes/opérations sur les figures 3 à 9.

Dans un premier temps, ce procédé consiste à préparer le cadre périphérique 5, formé de l'assemblage de ses deux montants latéraux 51, 52 avec la traverse basse 53 et la traverse haute 54 ; les faces latérales internes 51b, 52b, 53b, 54b des montants 51, 52 et traverses 53, 54 constituent ensemble une bordure interne qui délimite le logement central 6 (figure 3).

De préférence l'un au moins des montants 51, 52 et/ou l'une au moins des traverses 53, 54 comprend au moins un évent 55, formé chacun d'un orifice qui traverse leur largeur, c'est-à-dire qui débouche dans leur face latérale externe 51a, 52a, 53a, 54a et dans leur face latérale interne 51b, 52b, 53b, 54b.

Par exemple, chaque montant 51, 52 comprend un ou deux évents 55 au niveau de chacune de leurs extrémités ; et chaque traverse 53 et 54 comprend entre deux et quatre évents 55, régulièrement répartis sur leur longueur.

Les évents 55 peuvent être chacun constitué d'un orifice ayant un diamètre de l'ordre de 4 à 8 mm (par exemple un diamètre de 6 mm).

Le cadre périphérique 5 ainsi préparé est placé dans une installation de type presse 14 (figure 4) comprenant un support horizontal de presse 141 et un couvercle de presse 142.

Le support horizontal de presse 141 consiste ici en une table munie d'un revêtement antiadhérent 141a, par exemple en forme de bâche silicone ou revêtement téflon. Le couvercle de presse 142 est mobile entre une position fermée, à proximité du support horizontal de presse 141, et une position ouverte, éloigné dudit support horizontal de presse 141.

Comme on peut le voir sur la figure 4, le couvercle de presse 142 étant en position ouverte, le cadre périphérique 5 est posé à plat sur le support horizontal de presse 141, ses faces frontales intérieures 51c, 52c, 53c, 54c ou ses faces frontales extérieures 51d, 52d, 53d, 54d étant en contact direct avec le revêtement antiadhérent 141a. En l'occurrence, sur la figure 4, le cadre périphérique 5 repose sur le revêtement antiadhérent 141a du support horizontal de presse 141 par ses faces frontales extérieures 51d, 52d, 53d, 54d.

De la sorte, le logement central 6 du cadre périphérique 5 est fermé du côté du support horizontal de presse 141, et il est ouvert en partie supérieure, débouchant par une ouverture supérieure de logement 6a.

Le cas échéant, selon les besoins, le procédé comprend une opération de pose des accessoires intérieurs du panneau ouvrant 3 (vitrage(s), masse(s) lourde(s), caisson(s) isolant(s), gaine(s) ou tube(s) permettant de relier une serrure électrique (positionnée côté béquille) à une genouillère entre ouvrant et dormant (positionnée côté paumelles) etc.)..

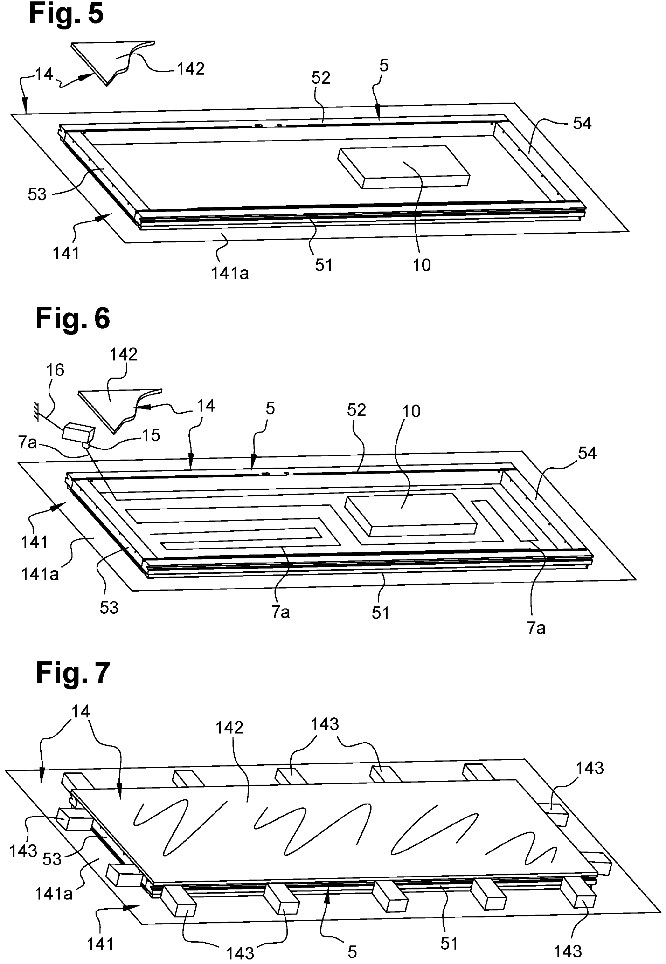

On a illustré sur la figure 5 la pose d'un vitrage 10 (pour former un oculus), à plat contre le revêtement antiadhérent 141a du support horizontal de presse 141.

On peut aussi envisager la pose d'autres vitrages, de décor(s), d'insert(s) mécanique(s), de renfort(s) acoustique(s) et/ou thermique(s), de gaine(s) plastiques(s) pour le passage de câbles électriques, ou autres.

Une opération suivante du procédé de fabrication conforme à l'invention consiste, comme illustré sur la figure 6, à déposer un mélange liquide ou semi-liquide de matériau moussant expansible isolant 7a dans le logement central 6 du cadre périphérique 5, par l'ouverture supérieure de logement 6a.

Le mélange liquide ou semi-liquide de matériau moussant expansible isolant 7a consiste de préférence en un mélange de polyol et d'isocyanate pour obtenir, après polymérisation, une mousse isolante 7 de type polyuréthane.

L'opération de dépose est réalisée au moyen d'une buse 15 adaptée (station de dosage et de mélange), qui est portée par un bras robot 16 mobile dans l'espace (par exemple un robot du type 5 axes). Cette dépose est réalisée par l'ouverture supérieure de logement 6a, de sorte à répartir le mélange liquide ou semi liquide 7a, de la manière la plus homogène possible, sur le support horizontal de presse 141 (et plus particulièrement sur son revêtement antiadhérent 141a), comme illustré sur la figure 6.

Les deux réactifs sont mélangés à haute pression dans la buse 15 (ou tête d'injection), et le mélange est ensuite déposé selon une trajectoire et une vitesse prédéterminées dans le logement central 6 du cadre périphérique 5, par exemple avec une pression et un débit constant. La dépose du mélange est réalisée de manière homogène (ou sensiblement homogène) et rapide, en déplaçant la buse 15 au-dessus de la surface à traiter. La trajectoire et la vitesse de dépose sont définies au préalable, en fonction de la configuration du logement central 6 et de la présence éventuelle d'accessoires intérieurs.

L'opération de dépose du mélange liquide ou semi-liquide de matériau moussant expansible isolant 7a peut durer de quelques dizaines de secondes à quelques minutes. Elle doit être finalisée avant que le mélange en expansion déborde du volume du logement central 6.

Dans une variante de réalisation, l'opération de dépose du mélange liquide ou semi-liquide de matériau moussant expansible peut être réalisée par un opérateur.

De préférence la presse 14 comprend des moyens de chauffage pour maintenir une température constante optimale pendant l'opération d'expansion de la mousse, par exemple de l'ordre de 40°C.

Une fois le mélange réparti de manière homogène ou sensiblement homogène dans le logement central 6, le couvercle de presse 142 est déplacé en position fermée, comme illustré sur la figure 7. Pour cela le couvercle de presse 142 vient se plaquer contre le cadre périphérique 5 de sorte à obturer l'ouverture supérieure de logement 6a ; en l'occurrence ce couvercle de presse 142 vient se placer ici en appui contre les faces frontales intérieures 51c, 52c, 53c, 54c du cadre périphérique 5.

Le mélange liquide ou semi-liquide de matériau moussant expansible isolant 7a peut alors poursuivre et finaliser son expansion dans le logement central 6 délimité par le cadre périphérique 5, le support horizontal de presse 141 et le couvercle de presse 142.

Comme représenté sur la figure 7, le cadre périphérique 5 est calé en périphérie, au moyen de cales 143, pour éviter toute déformation sous la poussée du mélange liquide ou semi-liquide de matériau moussant expansible isolant 7a, en cours d'expansion. Les cales 143 sont de préférence régulièrement réparties en appui contre les faces latérales externes 51a, 52a, 53a, 54a des montants 51, 52 et traverses 53, 54 du cadre périphérique 5.

Cette opération de calage au moyen des cales 143 peut être réalisée au moment de la fermeture du couvercle de presse 142. Mais de préférence elle est réalisée avant le début de l'opération de dépose du mélange liquide ou semi-liquide de matériau moussant expansible isolant 7a.

Pendant l'expansion du mélange liquide ou semi-liquide de matériau moussant expansible isolant 7a en milieu clos, les évents 55 du cadre périphérique 5 permettent l'évacuation de l'air sous pression à l'intérieur du logement central 6. Le nombre, la répartition et la dimension de ces évents 55 sont adaptés pour optimiser une répartition homogène de la mousse dans le logement central 6.

On notera que la présence des évents 55 contribue également à conserver la géométrie du cadre périphérique 5 en limitant sa déformation sous l'effort de l'expansion.

De préférence, les évents 55 sont calibrés de sorte à permettre leur obstruction par le matériau moussant expansible isolant 7a, avant que celui-ci s'écoule hors du cadre périphérique 5.

En fait, deux phénomènes se conjuguent pour empêcher cet écoulement :
- le déplacement de la mousse est freiné par le frottement mécanique à l'intérieur du trou d'évent de faible diamètre, et
- s'agissant d'un cadre en bois donc offrant une bonne isolation thermique, la température à l'intérieur des tronçons bois est plus basse que celle de la mousse et provoque un refroidissement de cette dernière qui freine puis bloque son déplacement dans le trou d'évent.

Dans une variante de réalisation les évents 55 peuvent être masqués par une pastille en matériau poreux laissant passer l'air et bloquant la mousse isolante.

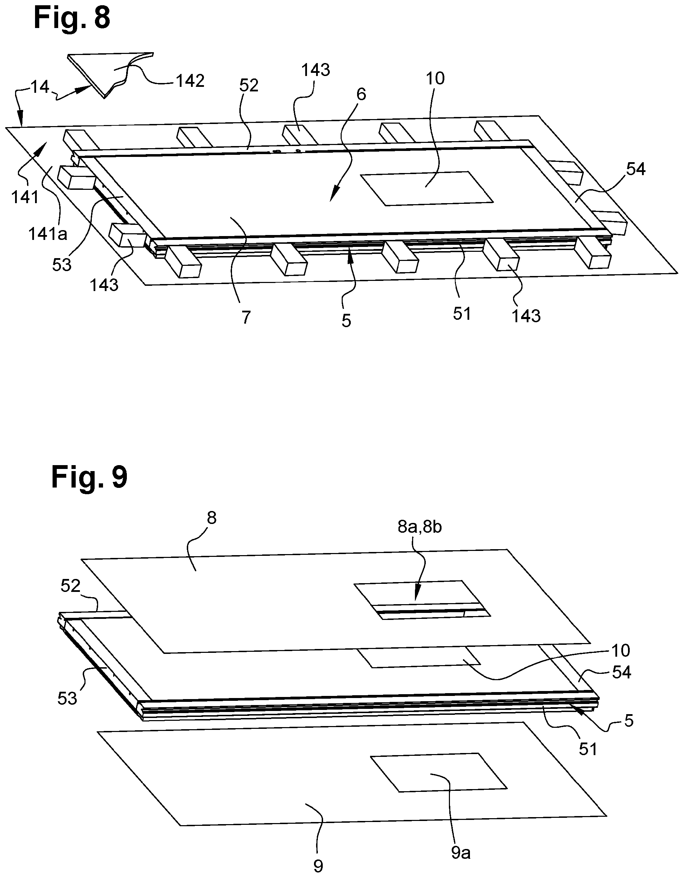

Après expansion totale du matériau moussant expansible isolant 7a, le couvercle de presse 142 est actionné pour le séparer du cadre périphérique 5 et le placer en position ouverte (figure 8).

L'ensemble cadre périphérique 5/mousse isolante 7 peut être extrait de la presse 14.

Lors de son process d'expansion la mousse isolante 7 est venue se fixer sur les faces latérales internes 51b, 52b, 53b, 54b du cadre périphérique 5, et sur les côtés du vitrage 10 et des accessoires complémentaires éventuels.

On obtient alors un ensemble rigide et résistant ayant une excellente tenue.

Le revêtement antiadhérent 141a empêche l'adhérence du mélange liquide ou semi-liquide de matériau moussant expansible isolant 7a sur le support horizontal de presse 141. Également, la face du couvercle de presse 142 destinée à venir en contact avec la mousse en expansion comprend avantageusement un revêtement antiadhérent.

Les parements intérieur 8 et extérieur 9 peuvent être posés (figure 9).

Le parement intérieur 8 (représenté ici schématiquement) est rapporté et fixé contre les faces frontales intérieures 51c, 52c, 53c, 54c du cadre périphérique 5, par exemple au moyen de plots d'emboitement permettant son démontage ; et le parement extérieur 9 est rapporté et fixé contre les faces frontales extérieures 51d, 52d, 53d, 54d du cadre périphérique 5, par exemple par collage.

La fabrication du panneau ouvrant 3 est finalisée par une opération de pose classique de la quincaillerie, telle que parties femelles de paumelles ou de fiches 4, poignée 4a, crémone, câbles électriques, quincaillerie diverse, après les opérations de pose des parements intérieur 8 et extérieur 9.

Selon une variante de réalisation, l'un des parements intérieur 8 ou extérieur 9 est fixé sur le cadre périphérique 5 avant l'opération de dépose du mélange liquide ou semi-liquide de matériau moussant expansible isolant 7a dans le logement central 6 ; et c'est sur ce parement 8 ou 9, fixé sur ledit cadre périphérique 5, que le mélange liquide ou semi-liquide de matériau moussant expansible isolant 7a est déposé. L'autre parement intérieur 8 ou extérieur 9 est fixé ultérieurement, après l'opération d'extraction, hors de la presse 14, de l'ensemble cadre périphérique 5/mousse isolante 7.

Dans l'exemple de réalisation illustré, le parement extérieur 9 serait celui susceptible d'être fixé sur le cadre périphérique 5, en vue de recevoir le mélange liquide ou semi-liquide de matériau moussant expansible isolant 7a.

Le parement extérieur peut alors être fixé sur le cadre périphérique (avec interposition d'un joint souple périphérique), en ayant au préalable revêtu le parement d'un produit anti-adhérant (film par exemple) pour le désolidariser de l'isolant. Il est également possible de créer un point de liaison entre l'isolant et le parement en créant une ouverture dans le film (par exemple, au centre de gravité du parement d'un ouvrant plein) pour éviter « le flottement central » du parement. L'avantage de cette variante est de disposer d'un film (lié à l'isolant) qui limite les pertes de gaz au sein de l'isolant, permettant ainsi de conserver un lambda vieilli aussi proche que possible du lambda initial et permettant donc d'améliorer la performance d'isolation thermique.

Encore dans une variante de réalisation, on peut réaliser l'opération de dépose du mélange liquide ou semi-liquide de matériau moussant expansible isolant, en dehors de la presse, puis introduire le cadre avec la mousse en cours d'expansion dans la presse (cela moyennant une mousse peu réactive pour laisser suffisamment de temps à la fermeture de presse). La dépose du matériau moussant expansible isolant est alors réalisée sur un support horizontal dédié ou sur l'un des parements intérieur/extérieur (constituant le support horizontal de presse) fixé sur le cadre périphérique pour fermer le dessous du logement central 6.

Bien entendu, diverses autres modifications peuvent être apportées à l'invention dans le cadre des revendications annexées.

Un tel procédé de fabrication présente différents avantages :
- le logement central est comblé de manière homogène par la mousse polyuréthane, même au niveau des zones de faibles sections.
- la faible poussée de la mousse en expansion limite grandement les déformations du panneau ouvrant.
- la quantité du mélange liquide ou semi-liquide de matériau moussant expansible isolant 7a qui est déposée correspond à celle nécessaire au volume à remplir, et on limite ainsi les pertes de matière.
- aucun déchet résultant de la découpe d'un isolant en plaque pour mise à dimensions de la porte souhaitée ; et aucun déchet résultant de la découpe d'un oculus dans un isolant ajusté au format de la porte.
- le garnissage complet du cadre et la polymérisation de la mousse polyuréthane au même moment, créent une liaison mécanique forte entre les éléments, ce qui garantit la stabilité géométrique du panneau ouvrant dans le temps.
- la tenue mécanique d'un éventuel vitrage d'oculus est assurée, en partie, par la mousse isolante qui vient entourer puis lier mécaniquement le vitrage au panneau isolant.
- la garantie du remplissage homogène par la mousse polyuréthane permet d'étendre les possibilités esthétiques du panneau ouvrant.
- les propriétés mécaniques du panneau ouvrant étant indépendantes des parements, le choix de la nature des deux parements est totalement libre (par exemple tôle acier, tôle aluminium, verre, PVC, bois... pour le parement extérieur; panneau décor, tôle aluminium, bois, verre... pour le parement intérieur).
- il est possible d'ajouter des insert(s) mécanique(s) qui peuvent servir d'entretoise(s) pour lier les parements intérieur et extérieur (par exemple réception d'un heurtoir, fixation d'une barre de tirage). Ces inserts mécaniques peuvent servir à créer un point de fixation pour les accessoires à fixer (barres de tirage, heurtoir...) mais ne lient pas nécessairement les parements extérieur et intérieur.
- il est possible d'ajouter une ou plusieurs masse(s) lourde(s) acoustique(s) dont la fixation mécanique est assurée par la mousse polyuréthane expansée.
- Il est encore possible d'ajouter des éléments de renfort contre l'effraction, noyés dans la mousse polyuréthane (par exemple : treillis métalliques, barres de renfort...).

## Revendications

1. Procédé de fabrication d'un panneau ouvrant (3) de porte (1), pour une porte destinée à équiper une ouverture de bâtiment entre un volume extérieur (E) et un volume intérieur (I), lequel panneau ouvrant (3) comprend :
- un cadre périphérique (5) formé de deux montants latéraux (51, 52), d'une traverse basse (53) et d'une traverse haute (54),
lesquels montants (51, 52) et traverses (53, 54) comprennent chacun une face latérale externe (51a, 52a, 53a, 54a), une face latérale interne (51b, 52b, 53b, 54b), une face frontale intérieure (51c, 52c, 53c, 54c) destinée à être orientée du côté dudit volume intérieur (I) du bâtiment et une face frontale extérieure (51d, 52d, 53d, 54d) destinée à être orientée du côté dudit volume extérieur (E) du bâtiment, lesquelles faces latérales internes (51b, 52b, 53b, 54b) desdits montants (51, 52) et traverses (53, 54) constituent ensemble une bordure interne qui délimite un logement central (6),
- une structure isolante (7) rapportée comblant au moins partiellement ledit logement central (6),
- un parement intérieur (8) fermant ledit logement central (6) du côté destiné à être orienté vers ledit volume intérieur (I) du bâtiment,
- un parement extérieur (9) fermant ledit logement central (6) du côté destiné à être orienté vers ledit volume extérieur (E) du bâtiment,
**caractérisé en ce que** ledit procédé de fabrication comprend les opérations consistant :
(a) à préparer ledit cadre périphérique (5),
(b) à fournir une installation de type presse (14) comprenant un support horizontal de presse (141) et un couvercle de presse (142),
(c) à poser ledit cadre périphérique (5) sur ledit support horizontal de presse (141), ledit logement central (6) étant fermé du côté dudit support horizontal de presse (141), et comprenant une ouverture supérieure de logement (6a),
(d) à déposer un mélange liquide ou semi-liquide de matériau moussant expansible isolant (7a) dans ledit logement central (6), par ladite ouverture supérieure de logement (6a),
(e) à actionner ledit couvercle de presse (142) pour le mettre en appui sur ledit cadre périphérique (5) et fermer ladite ouverture supérieure de logement (6a),
(f) à laisser le matériau moussant expansible isolant (7a) s'expandre dans ledit logement central (6),
(g) après expansion totale dudit matériau moussant expansible isolant (7a), à actionner ledit couvercle de presse (142) pour le séparer dudit cadre périphérique (5),
(h) à extraire l'ensemble cadre périphérique (5)/mousse isolante (7) de ladite presse (14).

2. Procédé de fabrication d'un panneau ouvrant (3) de porte (1) selon la revendication 1, **caractérisé en ce que** l'opération de dépose dudit mélange liquide ou semi-liquide de matériau moussant expansible isolant (7a) dans ledit logement central (6), par ladite ouverture supérieure de logement (6a), sur ledit support horizontal de presse (141), est réalisée avec ledit support horizontal de presse (141) installé dans ladite installation de type presse (14).

3. Procédé de fabrication d'un panneau ouvrant (3) de porte (1) selon la revendication 1, **caractérisé en ce qu'**il consiste :
- à poser ledit cadre périphérique (5), en dehors de l'installation de type presse (5), sur ledit support horizontal de presse,
- à déposer ledit mélange liquide ou semi-liquide de matériau moussant expansible isolant (7a) dans ledit logement central (6), par ladite ouverture supérieure de logement (6a), sur ledit support horizontal de presse,
- à introduire dans ladite installation de type presse (14) ledit cadre périphérique (5) avec ledit support horizontal de presse et ledit mélange liquide ou semi-liquide de matériau moussant expansible isolant (7a) en cours d'expansion, avant d'actionner ledit couvercle de presse (142).

4. Procédé de fabrication d'un panneau ouvrant (3) de porte (1) selon l'une quelconque des revendications 1 à 3, **caractérisé en ce que** l'opération de préparation du cadre périphérique (5) comprend une opération de réalisation d'au moins un évent (55) qui traverse l'un au moins desdits montants (51, 52) et/ou l'une au moins desdites traverses (53, 54) en débouchant dans ladite face latérale externe (51a, 52a, 53a, 54a) et dans ladite face latérale interne (51b, 52b, 53b, 54b), lequel au moins un évent (55) est adapté pour permettre l'évacuation de l'air sous pression à l'intérieur du logement central (6) dudit cadre périphérique (5) lors de l'expansion du mélange liquide ou semi-liquide de matériau moussant expansible isolant (7a).

5. Procédé de fabrication d'un panneau ouvrant (3) de porte (1) selon l'une quelconque des revendications 1 à 4, **caractérisé en ce qu'**il comprend une opération de calage, au moyen de cales (143), dudit cadre périphérique (5) posé sur ledit support horizontal de presse (142), avant l'opération de dépose du mélange liquide ou semi-liquide de matériau moussant expansible isolant (7a), ladite opération de calage étant réalisée du côté des faces latérales externes (51a, 52a, 53a, 54a) des montants (51, 52) et traverses (53, 54) dudit cadre périphérique (5), pour éviter sa déformation sous la poussée du matériau moussant expansible isolant (7a) lors de sa phase d'expansion.

6. Procédé de fabrication d'un panneau ouvrant (3) de porte (1) selon l'une quelconque des revendications 1 à 5, **caractérisé en ce qu'**il comprend une opération de pose des accessoires intérieurs du panneau ouvrant (3), tels que vitrage(s) (10), décor(s), insert(s) mécanique(s), renfort(s) acoustique(s) et/ou thermique(s), renfort(s) contre l'effraction, gaine(s) plastiques(s) pour le passage de câbles électriques, dans ledit logement central (6), entre l'opération de pose dudit cadre périphérique (5) sur ledit support horizontal de presse (141), et l'opération de dépose du mélange liquide ou semi-liquide de matériau moussant expansible isolant (7a).

7. Procédé de fabrication d'un panneau ouvrant (3) de porte (1) selon l'une quelconque des revendications 1 à 6, **caractérisé en ce que** ledit support horizontal de presse (141) consiste en une table munie d'un revêtement antiadhérent (141a), par exemple en forme de bâche silicone ou revêtement téflon, l'opération de dépose du mélange liquide ou semi-liquide de matériau moussant expansible isolant (7a) dans ledit logement central (6) étant réalisée directement sur ledit support horizontal de presse (141) constitué de ladite table munie de son revêtement antiadhérent (141a).

8. Procédé de fabrication d'un panneau ouvrant (3) de porte (1) selon la revendication 7, **caractérisé en ce qu'**il comprend des opérations de pose dudit parement intérieur (8) et dudit parement extérieur (9), après l'opération d'extraction hors de ladite presse (14) de l'ensemble cadre périphérique (5)/mousse isolante (7).

9. Procédé de fabrication d'un panneau ouvrant (3) de porte (1) selon l'une quelconque des revendications 1 à 6, **caractérisé en ce que** l'opération de préparation dudit cadre périphérique (5) comprend une opération de fixation de l'un desdits parement intérieur (8) ou extérieur (9) sur ledit cadre périphérique (5), l'opération de dépose du mélange liquide ou semi-liquide de matériau moussant expansible isolant (7a) dans ledit logement central (6) étant réalisée sur ledit parement intérieur (8) ou extérieur (9) fixé sur ledit cadre périphérique (5),
ledit procédé comprenant alors une opération de pose de l'autre parement intérieur (8) ou extérieur (9), après l'opération d'extraction, hors de ladite presse (14), de l'ensemble cadre périphérique (5)/mousse isolante (7).

10. Procédé de fabrication d'un panneau ouvrant (3) de porte (1) selon l'une quelconque des revendications 1 à 9, **caractérisé en ce qu'**il comprend une opération de pose de la quincaillerie du panneau ouvrant (3), telle que parties femelles de paumelles ou de fiches (4), poignée (4a), crémone, câbles électriques, quincaillerie diverse, après les opérations de pose des parements intérieur (8) et extérieur (9).

11. Procédé de fabrication d'un panneau ouvrant (3) de porte (1) selon l'une quelconque des revendications 1 à 10, **caractérisé en ce que** le mélange liquide ou semi-liquide de matériau moussant expansible isolant (7a) consiste en un mélange de polyol et d'isocyanate pour obtenir, après polymérisation, une mousse isolante (7) de type polyuréthane.

12. Procédé de fabrication d'un panneau ouvrant (3) de porte (1) selon l'une quelconque des revendications 1 à 11, **caractérisé en ce que** l'opération de dépose du mélange liquide ou semi-liquide de matériau moussant expansible isolant (7a) est réalisée au moyen d'une buse (15) adaptée, portée par un bras robot (16) mobile dans l'espace, ladite dépose étant réalisée de sorte à répartir ledit mélange liquide ou semi liquide (7a) sur le ledit support horizontal de presse (142) ou sur l'un desdits parements intérieur (8) ou extérieur (9), selon un programme prédéterminé.

13. Panneau ouvrant (3) de porte (1), pour une porte (1) destinée à équiper une ouverture de bâtiment,
lequel panneau ouvrant (3) est obtenu par un procédé selon l'une quelconque des revendications 1 à 12 et comprend :
- un cadre périphérique (5) formé de deux montants latéraux (51, 52), d'une traverse basse (53) et d'une traverse haute (54), qui délimitent ensemble un logement central (6),
- une structure isolante (7) rapportée comblant au moins partiellement ledit logement central (6) et fixée audit cadre périphérique (5),
- un parement intérieur (8) fermant un côté dudit logement central (6), et
- un parement extérieur (9) fermant l'autre côté dudit logement central (6).

14. Menuiserie de type porte (1) pour équiper une ouverture de bâtiment entre un volume extérieur (E) et un volume intérieur (I), laquelle menuiserie (1) comprend un cadre dormant (2) associé à un panneau ouvrant (3) selon la revendication 13.

## Patentansprüche

1. Verfahren zur Herstellung eines Türblatts (3) einer Tür (1) für eine Tür, die dazu bestimmt ist, eine Gebäudeöffnung zwischen einem äußeren Volumen (E) und einem inneren Volumen (I) auszustatten, wobei das Türblatt (3)
- einen aus zwei seitlichen Streben (51, 52), einer unteren Querstrebe (53) und einer oberen Querstrebe (54) gebildeten umlaufenden Rahmen (5),
wobei die seitlichen Streben (51, 52) und die Querstreben (53, 54) jeweils eine äußere Seitenfläche (51a, 52a, 53a, 54a), eine innere Seitenfläche (51b, 52b, 53b, 54b), eine innere Frontfläche (51c, 52c, 53c, 54c), die dazu bestimmt ist, zum inneren Volumen (I) des Gebäudes hin gerichtet zu sein, und eine äußere Frontfläche (51d, 52d, 53d, 54d), die dazu bestimmt ist, zum äußeren Volumen (E) des Gebäudes hin gerichtet zu sein, aufweisen, wobei die inneren Seitenflächen (51b, 52b, 53b, 54b) der seitlichen Streben (51, 52) und der Querstreben (53, 54) zusammen einen inneren Rand bilden, der einen zentralen Aufnahmeraum (6) abgrenzt,
- eine hinzugefügte Isolationsstruktur (7), die den zentralen Aufnahmeraum (6) mindestens teilweise ausfüllt,
- eine innere Verkleidung (8), die den zentralen Aufnahmeraum (6) auf der Seite abschließt, die dazu bestimmt ist, zum inneren Volumen (I) des Gebäudes hin gerichtet zu sein,
- eine äußere Verkleidung (9), die den zentralen Aufnahmeraum (6) auf der Seite abschließt, die dazu bestimmt ist, zum äußeren Volumen (E) des Gebäudes hin gerichtet zu sein,
aufweist,
**dadurch gekennzeichnet, daß** das Herstellungsverfahren die Schritte aufweist, die darin bestehen,
(a) den umlaufenden Rahmen (5) herzustellen,
(b) eine Installation vom Typ einer Presse (14) bereitzustellen, die einen horizontalen Pressenträger (141) und einen Pressendeckel (142) aufweist,
(c) den umlaufenden Rahmen (5) auf den horizontalen Pressenträger (141) zu legen, wobei der zentrale Aufnahmeraum (6) auf der Seite des horizontalen Pressenträgers (141) geschlossen ist und eine obere Raumöffnung (6a) aufweist,
(d) eine flüssige oder halbflüssige Mischung aus schäumendem, ausdehnbarem, isolierendem Material (7a) durch die obere Raumöffnung (6a) in den zentralen Aufnahmeraum (6) einzubringen,
(e) den Pressendeckel (142) zu betätigen, um ihn auf den umlaufenden Rahmen (5) zu drücken und die obere Raumöffnung (6a) zu schließen,
(f) das schäumende, ausdehnbare, isolierende Material (7a) sich im zentralen Aufnahmeraum (6) ausdehnen zu lassen,
(g) nach dem vollständigen Ausdehnen des schäumenden, ausdehnbaren, isolierenden Materials (7a) den Pressendeckel (142) zu betätigen, um ihn vom umlaufenden Rahmen (5) zu trennen,
(h) die Gesamtheit aus umlaufendem Rahmen (5) und isolierendem Schaum (7) aus der Presse (14) herauszunehmen.

2. Verfahren zur Herstellung eines Türblatts (3) einer Tür (1) gemäß Anspruch 1, **dadurch gekennzeichnet, daß** der Vorgang des Einbringens der flüssigen oder halbflüssigen Mischung aus schäumendem, ausdehnbarem, isolierendem Material (7a) durch die obere Raumöffnung (6a) in den zentralen Aufnahmeraum (6) mit dem horizontalen Pressenträger (141) erfolgt, der in der Installation vom Typ einer Presse (14) eingebaut ist.

3. Verfahren zur Herstellung eines Türblatts (3) einer Tür (1) gemäß Anspruch 1, **dadurch gekennzeichnet, daß** es darin besteht,
- den umlaufenden Rahmen (5) außerhalb der Installation vom Typ einer Presse (14) auf den horizontalen Pressenträger aufzulegen,
- die flüssige oder halbflüssige Mischung aus schäumendem, ausdehnbarem, isolierendem Material (7a) auf dem horizontalen Pressenträger durch die obere Raumöffnung (6a) in den zentralen Aufnahmeraum (6) einzubringen,
- den umlaufenden Rahmen (5) mit dem horizontalen Pressenträger und der in Ausdehnung befindlichen flüssigen oder halbflüssigen Mischung aus schäumendem, ausdehnbarem, isolierendem Material (7a) in die Installation vom Typ einer Presse (14) einzubringen, bevor der Pressendeckel (142) betätigt wird.

4. Verfahren zur Herstellung eines Türblatts (3) einer Tür (1) gemäß einem der Ansprüche 1 bis 3, **dadurch gekennzeichnet, daß** der Vorgang der Vorbereitung des umlaufenden Rahmens (5) einen Vorgang der Anfertigung mindestens einer Entlüftungsöffnung (55) aufweist, die mindestens eine der seitlichen Streben (51, 52) und/oder mindestens eine der Querstreben (53, 54) durchquert und dabei in der äußeren Seitenfläche (51a, 52a, 53a, 54a) und in der inneren Seitenfläche (51b, 52b, 53b, 54b) mündet, wobei die mindestens eine Entlüftungsöffnung (55) dazu ausgelegt ist, ein Abführen der im Inneren des zentralen Aufnahmeraums (6) des umlaufenden Rahmens (5) befindlichen, unter Druck stehenden Luft bei der Ausweitung der flüssigen oder halbflüssigen Mischung isolierenden, sich ausdehnenden Schaummaterials (7a) zu ermöglichen.

5. Verfahren zur Herstellung eines Türblatts (3) einer Tür (1) gemäß einem der Ansprüche 1 bis 4, **dadurch gekennzeichnet, daß** es vor dem Vorgang des Auftragens der flüssigen oder halbflüssigen Mischung isolierenden, sich ausdehnenden Schaummaterials (7a) einen Vorgang des Verkeilens des umlaufenden Rahmens (5) mittels Keilen (143) gibt, wobei der Vorgang des Verkeilens auf der Seite der äußeren Seitenflächen (51a, 52a, 53a, 54a) der seitlichen Streben (51, 52) und Querstreben (53, 54) des umlaufenden Rahmens (5) durchgeführt wird, um dessen Verformung unter dem Druck des isolierenden, sich ausdehnenden Schaummaterials (7a) in der Ausdehnungsphase zu vermeiden.

6. Verfahren zur Herstellung eines Türblatts (3) einer Tür (1) gemäß einem der Ansprüche 1 bis 5, **dadurch gekennzeichnet, daß** es einen Vorgang des Anbringens von inneren Zubehörteilen des Türblatts (3) wie etwa Verglasung(en) (10), Verzierung(en), mechanischer Einsatz bzw. mechanische Einsätze, akustische und/oder thermische Verstärkung(en), Verstärkung(en) gegen Einbruch, Plastikschlauch bzw. -schläuche für das Einziehen von Kabeln, in dem zentralen Aufnahmeraum (6) zwischen dem Vorgang des Aufbringens des umlaufenden Rahmens (5) auf dem horizontalen Pressenträger (141) und dem Vorgang des Aufbringens der flüssigen oder halbflüssigen Mischung aus schäumendem, ausdehnbarem, isolierendem Material (7a) aufweist.

7. Verfahren zur Herstellung eines Türblatts (3) einer Tür (1) gemäß einem der Ansprüche 1 bis 6, **dadurch gekennzeichnet, daß** der horizontale Pressenträger (141) aus einem Tisch mit einer Antihaftungsauflage (141a), zum Beispiel in Form einer Silikonplane oder einer Teflonauflage besteht, wobei der Vorgang des Aufbringens der flüssigen oder halbflüssigen Mischung aus schäumendem, ausdehnbarem, isolierendem Material (7a) im zentralen Aufnahmeraum (6) direkt auf dem horizontalen, aus dem Tisch mit Antihaftungsauflage (141a) bestehenden Pressenträger (141) erfolgt.

8. Verfahren zur Herstellung eines Türblatts (3) einer Tür (1) gemäß Anspruch 7, **dadurch gekennzeichnet, daß** es nach dem Vorgang des Herausnehmens der Gesamtheit von umlaufendem Rahmen (5) und isolierendem Schaum (7) Vorgänge des Aufbringens der inneren Verkleidung (8) und der äußeren Verkleidung (9) aufweist.

9. Verfahren zur Herstellung eines Türblatts (3) einer Tür (1) gemäß einem der Ansprüche 1 bis 6, **dadurch gekennzeichnet, daß** der Vorgang des Vorbereitens des umlaufenden Rahmens (5) einen Vorgang des Befestigens der inneren Verkleidung (8) oder der äußeren Verkleidung (9) auf dem umlaufenden Rahmen (5) aufweist, wobei der Vorgang des Aufbringens der flüssigen oder halbflüssigen Mischung schäumenden, ausdehnbaren, isolierenden Materials (7a) im zentralen Aufnahmeraum (6) auf der auf dem umlaufenden Rahmen (5) befestigten inneren (8) oder äußeren (9) Verkleidung ausgeführt wird.

10. Verfahren zur Herstellung eines Türblatts (3) einer Tür (1) gemäß einem der Ansprüche 1 bis 9, **dadurch gekennzeichnet, daß** es nach den Vorgängen des Aufbringens der inneren (8) und der äußeren (9) Verkleidung einen Vorgang des Aufbringens der Beschläge des Türblatts (3), wie zum Beispiel weiblicher Teile von Türschamieren oder Bandlappen (4), eines Griffs (4a), Treibstangenbeschlags, elektrischer Kabel, verschiedener Beschläge, nach dem Vorgang des Aufbringens innerer (8) oder äußerer (9) Verkleidungen aufweist.

11. Verfahren zur Herstellung eines Türblatts (3) einer Tür (1) gemäß einem der Ansprüche 1 bis 10, **dadurch gekennzeichnet, daß** die flüssige oder halbflüssige Mischung schäumenden, ausdehnbaren, isolierenden Materials (7a) aus einer Mischung von Polyol und Isocyanat besteht, um nach der Polymerisation einen isolierenden Schaum (7) vom Polyurethantyp zu erhalten .

12. Verfahren zur Herstellung eines Türblatts (3) einer Tür (1) gemäß einem der Ansprüche 1 bis 11, **dadurch gekennzeichnet, daß** der Vorgang des Aufbringens der flüssigen oder halbflüssigen Mischung schäumenden, ausdehnbaren, isolierenden Materials (7a) mittels einer angepaßten Düse (15) erfolgt, die von einem mobilen Roboterarm (16) im Raum getragen wird, wobei das Auftragen so ausgeführt wird, daß die flüssige oder halbflüssige Mischung (7a) auf dem horizontalen Pressenträger (142) oder auf einer der inneren (8) oder äußeren (9) Verkleidungen nach einem vorbestimmten Programm durchgeführt wird .

13. Öffnendes Türblatt (3) einer Tür (1) für eine Tür (1), die dazu bestimmt ist, eine Gebäudeöffnung zu bestücken,
wobei das öffnende Türblatt (3) durch ein Verfahren gemäß einem der Ansprüche 1 bis 12 erhalten wird und
- einen umlaufenden Rahmen (5), der aus zwei seitlichen Streben (51, 52), einem unteren Querbalken (53) und einem oberen Querbalken (54) gebildet ist, die zusammen eine zentrale Aufnahme (6) begrenzen,
- eine hinzugefügte isolierende Struktur (7), die die zentrale Aufnahme (6) mindestens teilweise ausfüllt und am umlaufenden Rahmen (5) befestigt ist,
- eine innere Verkleidung (8), die eine Seite der zentralen Aufnahme (6) abschließt, und
- eine äußere Verkleidung (9), die die andere Seite der zentralen Aufnahme (9) abschließt,
aufweist.

14. Tischlerarbeit vom Typ einer Tür (1) zum Ausstatten einer Gebäudeöffnung zwischen einem äußeren Volumen (E) und einem inneren Volumen (I), wobei die Tischlerarbeit (1) einen feststehenden Rahmen (2) aufweist, der einer sich öffnenden Tafel (3) gemäß Anspruch 13 zugeordnet ist.

## Claims

1. A method for manufacturing an opening panel (3) of a door (1), for a door intended to equip an opening in a building between an exterior volume (E) and an interior volume (I), said opening panel (3) comprising:
- a peripheral frame (5) formed of two lateral posts (51, 52), a bottom transom (53) and a top transom (54),
said posts (51, 52) and transoms (53, 54) each comprising an external side face (51a, 52a, 53a, 54a), an internal side face (51b, 52b, 53b, 54b), an internal front face (51c, 52c, 53c, 54c) intended to be directed toward said interior volume (I) of the building and an external front face (51d, 52d, 53d, 54d) intended to be directed towards said exterior volume (E) of the building, said internal side faces (51b, 52b, 53b, 54b) of said posts (51, 52) and transoms (53, 54) forming together an internal edge that delimits a central housing (6),
- an added insulating structure (7) filling at least partially said central housing (6),
- an internal facing (8) closing said central housing (6) on the side intended to be directed toward said interior volume (I) of the building,
- an external facing (9) closing said central housing (6) on the side intended to be directed toward said exterior volume (E) of the building,
**characterized in that** said manufacturing method comprises the operations consisting in:
(a) preparing said peripheral frame (5),
(b) providing a press-type installation (14) comprising a horizontal press support (141) and a press cover (142),
(c) placing said peripheral frame (5) on said horizontal press support (141), said central housing (6) being closed on the side of said horizontal press support (141), and comprising an upper housing opening (6a),
(d) applying a liquid or semi-liquid mixture of insulating expandable foaming material (7a) into said central housing (6), through said upper housing opening (6a),
(e) operating said press cover (142) so as to apply it against said peripheral frame (5) and to close said upper housing opening (6a),
(f) allowing the insulating expandable foaming material (7a) to expand in said central housing (6),
(g) after full expansion of said insulating expandable foaming material (7a), operating said press cover (142) to separate it from said peripheral frame (5),
(h) extracting the peripheral frame (5)/insulating foam (7) assembly from said press (14).

2. The method for manufacturing an opening panel (3) of a door (1) according to claim 1, **characterized in that** the operation of applying said liquid or semi-liquid mixture of insulating expandable foaming material (7a) into said central housing (6), through said upper housing opening (6a), on said horizontal press support (141), is made with said horizontal press support (141) installed in said press-type installation (14).

3. The method for manufacturing an opening panel (3) of a door (1) according to claim 1, **characterized in that** it consists in:
- placing said peripheral frame (5), outside the press-type installation (14), on said horizontal press support,
- applying said liquid or semi-liquid mixture of insulating expandable foaming material (7a) into said central housing (6), through said upper housing opening (6a), on said horizontal press support,
- introducing into said press-type installation (14) said peripheral frame (5) with said horizontal press support and said liquid or semi-liquid mixture of insulating expandable foaming material (7a) under expansion, before operating said press cover (142).

4. The method for manufacturing an opening panel (3) of a door (1) according to any one of claims 1 to 3, **characterized in that** the operation of preparing the peripheral frame (5) comprises an operation of making at least one vent (55) that passes through at least one of said posts (51, 52) and/or one at least of said transoms (53, 54), opening into said external side face (51a, 52a, 53a, 54a) and into said internal side face (51b, 52b, 53b, 54b), said at least one vent (55) being adapted to allow the evacuation of air under pressure inside the central housing (6) of said peripheral frame (5) during the expansion of the liquid or semi-liquid mixture of insulating expandable foaming material (7a).

5. The method for manufacturing an opening panel (3) of a door (1) according to any one of claims 1 to 4, **characterized in that** it comprises an operation of wedging, by means of shims (143), of said peripheral frame (5) placed on said horizontal press support (142), before the operation of applying the liquid or semi-liquid mixture of insulating expandable foaming material (7a), said wedging operation being made on the side of the external side faces (51a, 52a, 53a, 54a) of the posts (51, 52) and transoms (53, 54) of said peripheral frame (5), to prevent it from deforming under the thrust of the insulating expandable foaming material (7a) during the expansion phase thereof.

6. The method for manufacturing an opening panel (3) of a door (1) according to any one of claims 1 to 5, **characterized in that** it comprises an operation of fitting the internal accessories of the opening panel (3), such as glazing(s) (10), decoration(s), mechanical insert(s), acoustic and/or thermal reinforcement(s), anti-burglary reinforcement(s), plastic sheath(s) for the passage of electrical cables, in said central housing (6), between the operation of placing said peripheral frame (5) on said horizontal press support (141), and the operation of applying the liquid or semi-liquid mixture of insulating expandable foaming material (7a).

7. The method for manufacturing an opening panel (3) of a door (1) according to any one of claims 1 to 6, **characterized in that** said horizontal press support (141) consists of a table provided with a non-stick coating (141a), for example in the form of a silicone sheet or a Teflon coating, the operation of applying the liquid or semi-liquid mixture of insulating expandable foaming material (7a) into said central housing (6) being carried out directly on said horizontal press support (141) consisting of said table provided with its non-stick coating (141a).

8. The method for manufacturing an opening panel (3) of a door (1) according to claim 7, **characterized in that** it comprises operations of fitting said internal facing (8) and said external facing (9), after the operation of extracting the peripheral frame (5)/insulating foam (7) assembly from said press (14).

9. The method for manufacturing an opening panel (3) of a door (1) according to any one of claims 1 to 6, **characterized in that** the operation of preparing said peripheral frame (5) comprises an operation of attaching one of said internal (8) or external (9) facings to said peripheral frame (5), the operation of applying the liquid or semi-liquid mixture of insulating expandable foaming material (7a) into said central housing (6) being made on said internal (8) or external (9) facing attached to said peripheral frame (5),
said method then comprising an operation of fitting the other internal (8) or external (9) facing, after the operation of extracting the peripheral frame (5)/insulating foam (7) assembly from said press (14).

10. The method for manufacturing an opening panel (3) of a door (1) according to any one of claims 1 to 9, **characterized in that** it comprises an operation of fitting the hardware of the opening panel (3), such as female hinge or furniture parts (4), handle (4a), lock bar, electrical cables, miscellaneous hardware, after the operations of fitting the internal (8) and external (9) facings.

11. The method for manufacturing an opening panel (3) of a door (1) according to any one of claims 1 to 10, **characterized in that** the liquid or semi-liquid mixture of insulating expandable foaming material (7a) consists of a mixture of polyol and isocyanate to obtain, after polymerisation, a polyurethane-type insulating foam (7).

12. The method for manufacturing an opening panel (3) of a door (1) according to any one of claims 1 to 11, **characterized in that** the operation of applying the liquid or semi-liquid mixture of insulating expandable foaming material (7a) is made using a suitable nozzle (15), carried by a spatially mobile robot arm (16), said application being made in such a way as to distribute said liquid or semi-liquid mixture (7a) over said horizontal press support (142) or over one of said internal (8) or external (9) facings, according to a predetermined program.

13. An opening panel (3) of a door (1), for a door (1) intended to equip an opening in a building,
said opening panel (3) being obtained by a method according to any one of claims 1 to 12 and comprising:
- a peripheral frame (5) formed of two lateral posts (51, 52), a bottom transom (53) and a top transom (54), that delimit together a central housing (6),
- an added insulating structure (7) filling at least partially said central housing (6) and attached to said peripheral frame (5),
- an internal facing (8) closing one side of said central housing (6), and
- an external facing (9) closing the other side of said central housing (6).

14. A door-type joinery (1) to equip an opening in a building between an exterior volume (E) and an interior volume (I), said joinery (1) comprising a fixed frame (2) associated with an opening panel (3) according to claim 13.
